# EUROPÄISCHE PATENTSCHRIFT

(11) **EP 0 390 253 B1**
(45) Veröffentlichungstag und Bekanntmachung des Hinweises auf die Patenterteilung: **04.01.1995**
(21) Anmeldenummer: 90200642.8
(22) Anmeldetag: 19.03.1990
(51) Int. Cl.: H02J 7/34, B26B 19/28

(54) **Ladevorrichtunng für mit Akkumulatoren betriebene elektrische Geräte**
Charger device for electrical tools driven by accumulators
Dispositif chargeur pour appareils électriques munis d'accumulateurs

(30) Priorität: 25.03.1989 DE 3909895
(43) Veröffentlichungstag der Anmeldung: 03.10.1990
(73) Patentinhaber: Philips Patentverwaltung GmbH, 22335 Hamburg (DE); Philips Electronics N.V., 5621 BA Eindhoven (NL)
(72) Erfinder: Bertram, Leo, D-5190 Stolberg (DE); Husgen, Theodor, D-5100 Aachen (DE); Schemmann, Hugo, Dr., Schaesberg (NL)
(74) Vertreter: Peters, Carl Heinrich, Dipl.-Ing.

(56) Entgegenhaltungen:
- EP-A- 0 319 941
- DE-A- 3 641 978
- GB-A- 2 088 656
- TECHNISCHE MITTEILUNGEN HALBLEITER, B11 (1971) 1062, pages 17-18, W. HAMMELEHLE et al.: "Neue fotoelektrische Bauelemente in Anwendungsschaltungen."

## Beschreibung

Die Erfindung bezieht sich auf eine Ladevorrichtung für mit Akkumulatoren betriebene Verbraucher gemäß dem Oberbegriff des Hauptanspruchs.

Aus der DE-OS 36 41 978 ist eine Ladevorrichtung bekannt. Die Außenseite eines Trockenrasiergerätes ist dabei mit einem Solarzellenmodul versehen, der unmittelbar auf die Akkumulatoren geschaltet ist. Um einen genügenden Ladestrom zu erreichen, ist die Solarzellenfläche dabei insbesondere durch das Ausklappen von Zusatzsolarflächen möglichst groß bemessen. Bei der direkten Aufladung ergibt sich insbesondere bei Verwendung von Nickel-Cadmium-Akkumulatoren jedoch die Schwierigkeit, daß bei bedecktem Himmel oder im Winter die von dem Solarzellenmodul gelieferten Ströme so klein werden, daß die von den Akkumulator-Herstellern angegebenen Mindestwerte des Ladestromes (Ladestromschwelle) von etwa einem Dreißigstel der Akkumulator-Kapazität unterschritten werden. So läßt ein Akkumulator-Hersteller für einen Nickel-Cadmium-Akkumulator bei einer Kapazität von 600 mAh einen minimalen Dauerladestrom von 20mA zu. Kleinere Akkumulator-Kapazitäten, die mit kleineren Ladeströmen betreibbar wären, verbieten sich, weil der Akkumulator ohne Zuladung zu schnell leer gefahren wäre.

Der von dem Solarzellenmodul abgegebene Solarstrom hängt von der aktiven Fläche der Solarzellen und dem Ausmaß der Sonneneinstrahlung ab. Die Fläche des Solarzellenmoduls wird begrenzt durch die Abmessungen des Gerätes, so daß sich ein Mindestwert für die erfaßbare Sonneneinstrahlung feststellen läßt. Bei einer aktiven Fläche von ca. 40 cm² beträgt die erforderliche Mindeststrahlung bei derzeit handelsüblichen Solarzellenmodulen für die Ladung der genannten Akkumulatoren bei einer Nennspannung von 2,4 V etwa 36.000 Lx. Je nach Bewölkung, Raumlage und Lichtdurchlässigkeit des Fensterglases wird dieser Wert im Winter über längere Zeit nicht erreicht, so daß die Solarzuladung dann überhaupt nicht wirksam werden kann, weil die von dem Solarzellenmodul gelieferten Ströme zu klein sind. Demgegenüber könnte man mit einem Strom von 10 mA in etwa 4 Stunden die Energie für eine Rasur, etwa 360 Ws in den Akkumulator einspeisen. Selbst kleinere Ströme würden immer noch zu einer Verlängerung der Rasierzeit ohne eine Netzzuladung führen.

In dem Buch "Gerätebatterien" von H.A. Kiehne u.a., Expert Verlag, Band 104, Kontakt & Studium, Elektrotechnik, wird auf Seite 50 auf die denkbare Möglichkeit hingewiesen, die Ladefähigkeit von Akkumulatoren bei sehr kleinen Ladeströmen zu verbessern oder aber neue Schaltungen zur Umwandlung kleiner Ladeströme in kräftigere Stromimpulse zu entwickeln.

Aus der GB-A-2 088 656 ist ein Nachrichtengerät bekannt, welches durch eine Speicherbatterie gespeist wird. Die Speicherbatterie kann von einem Solarfeld mit Energie versorgt werden. Dazu ist ein Solarfeld über einen Gleichrichter mit einem Ladungsregler verbunden, der seinerseits mit der Speicherbatterie verbunden ist. Der Ladungsregler enthält einen Speicherkondensator, der parallel zum Solarfeld geschaltet ist. Der Ladestrom vom Solarfeld wird über einen Strommeßwiderstand, einen als Transistor ausgebildeten Stromschalter und eine Induktivität der Speicherbatterie zugeführt. Durch eine Steuerschaltung 29 werden dem Stromschalter Schaltpulse zugeführt, deren Frequenz von der im Kondensator gespeicherten Ladung abhängt. Hinter dem Stromschalter ist außerdem parallel zu der Reihenschaltung aus der Induktivität und der Speicherbatterie eine Freilaufdiode geschaltet. Der Stromschalter, die Induktivität und die Freilaufdiode bilden einen Schaltwandler.

Es ist Aufgabe der Erfindung, eine Ladevorrichtung der eingangs erwähnten Art zu schaffen, die eine Aufladung eines Akkumulators in einfacher Weise auch dann ermöglicht, wenn die Sonneneinstrahlung nicht mehr ausreicht, um den für die Ladung erforderlichen minimalen Ladestrom zu liefern.

Die gestellte Aufgabe ist erfindungsgemäß durch die kennzeichnenden Merkmale des Hauptanspruchs gelöst.

Die Ladeleistung der Solarzellen wird damit erst gesammelt und dann, wenn der Ladestrom zur Ladung des Akkumulators ausreicht, an diesen abgegeben. Damit kann auch bei schlechten Lichtverhältnissen und einem Strom des Solarzellenmoduls, der unterhalb des für die sofortige Ladung liegenden Stroms liegt, die Anordnung zum Laden des Akkumulators eingesetzt werden. So läßt sich die Solarnachladung wesentlich länger vornehmen, als es ohne Vorspeicherung möglich wäre.

Die Schalteinrichtung sorgt dafür, daß erst der Energie-Vorspeicher, sei es ein Kondensator oder ein Akkumulator kleiner Ladekapazität, bei ungünstiger Witterung und geringen Sonneneinstrahlungswerten aufgeladen wird und daß die in ihm vorgespeicherte Energie dann pulsierend energiepaketweise an den Akkumulator abgegeben wird. Überschreiten die Ladeströme des Solarzellenmoduls den Schwellenwert der Ladefähigkeit des Akkumulators, dann schaltet die Schalteinrichtung die Solarleistung auf den Akkumulator durch. Eine Sperrdiode in Reihe mit dem Solarzellenmodul verhindert einen Stromrückfluß.

Nach einer weiteren Ausgestaltung der Erfindung ist vorgesehen, daß als Energie-Vorspeicher wenigstens ein Kondensator vorgesehen ist. Kondensatoren eignen sich als Energie-Vorspeicher besonders gut, da sie preiswert sind und beim Einsatz in elektrischen Geräten im Gehäuse genügend Platz finden. Besonders kleinbauend wird die Ladevorrichtung, wenn nach einer weiteren Ausgestaltung der Erfindung vorgesehen ist, daß der Energie-Vorspeicher ein zusätzlicher Akkumulator kleinerer Ladekapazität ist.

Ein Maß für die in den Energie-Vorspeicher eingespeiste Leistung ist bei einem Kondensator die Kondensatorladespannung U_{c}, die proportional der Kondensatorladung und umgekehrt proportional der Kapazität ist. Der Akkumulatorladestrom wird durch die Differenz von Kondensatorspannung und Akkumulatorspannung sowie die im Kreis wirksamen Widerstände bestimmt, wobei der Innenwiderstand des Akkumulators sehr klein ist. Die Kondensatorspannung hat somit einen bestimmenenden Einfluß auf den Strom, vorausgesetzt, daß die anderen Einflußgrößen sich nicht so stark ändern. Wird als Energie-Vorspeicher ein zusätzlicher Akkumulator verwendet, so gilt sinngemäß etwa das gleiche für die Vorschalt-Akkumulatorspannung. Der Spannungshub zwischen dem Zuschalten und dem Abschalten des Vorspeichers bestimmt zusammen mit der Solarzellennachladung die Taktfrequenz der Anordnung. Die Solarzellen müssen dabei so ausgelegt sein, daß sie auch bei ungünstiger Witterung den Vorspeicher auf eine Spannung aufladen können, die genügend groß ist, um den Akkumulator gegen dessen Leerlaufspannung im geladenen Zustand und gegen die Spannungsabfälle im Schaltkreis mit dem erforderlichen Strom aufzuladen.

Nach einer weiteren Ausgestaltung der Erfindung ist vorgesehen, daß der spannungsabhängige Schalter ein hysteresebehafteter Schmitt-Trigger oder ein Fensterdiskriminator mit einstellbaren Schwellwerten ist. Ein Schmitt-Trigger ist dabei ein besonders einfaches elektronisches Element, und ein Fensterdiskriminator gibt mehr Möglichkeiten zur präzisen Steuerung des Schalttransistors.

Nach einer weiteren Ausgestaltung der Erfindung ist vorgesehen, daß die Ladevorrichtung eine zusätzliche Hilfsbatterie enthält zum Sichern der Spannungsversorgung. Die Steuereinheit ist dadurch unabhängig vom Ladezustand des Akkumulators.

Nach einer weiteren Ausgestaltung der Erfindung ist vorgesehen, daß die Ladevorrichtung eine Up-Converterschaltung enthält zum Sicherstellen der Spannungsversorgung des spannungsabhängigen Schalters, wobei die Spannung aus dem Akkumulator mittels der Up-Converterschaltung auf das zum Betrieb erforderliche Niveau angehoben wird. Bei dieser Ausführung kann auf eine Hilfsbatterie verzichtet werden.

Nach einer weiteren Ausgestaltung der Erfindung ist vorgesehen, daß zwischen dem spannungsabhängigen Schalter und dem Schalttransistor eine Treiberstufe vorgesehen ist. Damit können auch höhere Steuerleistungen des Schalttransistors erbracht werden.

Nach einer weiteren Ausgestaltung der Erfindung ist vorgesehen, daß der Schalttransistor ein bipolarer Transistor, ein Darlington-Transistor oder ein Feldeffekttransistor ist.

Nach einer weiteren Ausgestaltung der Erfindung ist vorgesehen, daß die Steuerung des Schalttransistors abhängig ist sowohl von der Spannung am Energiespeicher als auch vom Ladestrom des Akkumulators. Hiermit läßt sich sicherstellen, daß bei genügend großem Solarstrom das Unterbrechen des Ladestromkreises unterbunden wird.

Nach einer weiteren Ausgestaltung der Erfindung ist vorgesehen, daß die Schalteinrichtung aus zwei spannungsabhängigen Schaltern besteht, wobei der eine Schalter von der Spannung am Energiespeicher und der andere von einer ladestromabhängigen Spannung gesteuert wird, die an einem Begrenzungswiderstand im Ladestromkreis abgegriffen wird, wobei die beiden Schalter einen bistabilen Multivibrator setzen bzw. löschen zum Steuern des Schalttransistors im Ladestromkreis. Die Schaltkriterien lassen sich damit gut detektieren.

Die Erfindung wird anhand der Zeichnung näher erläutert. Es zeigen:
Fig. 1 als Beispiel ein elektrisches Trockenrasiergerät mit einer Solarladeeinrichtung, die auch bei niedrigeren Ladeströmen noch eine Aufladung der Akkumulatoren ermöglicht,
Fig. 2, 3 und 4 verschiedene Prinzipschaltbilder von Ladevorrichtungen für das elektrische Trockenrasiergerät nach Fig. 1.

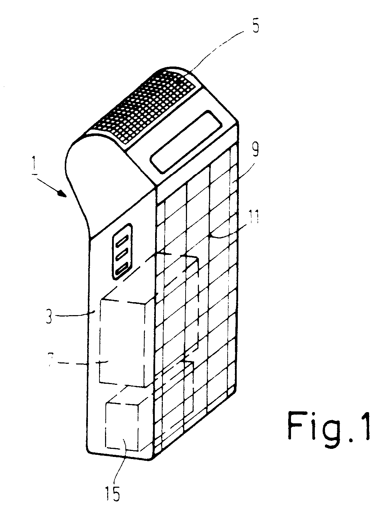

Fig. 1 zeigt einen elektrischen Trockenrasierapparat 1 in schaubildlicher Darstellung mit einem Gehäuse 3 und einem Scherkopf 5. In dem Gehäuse 3 ist, gestrichelt angedeutet, ein aufladbarer Akkumulator 7 vorgesehen, der den nicht dargestellten Antriebsmotor des Scherkopfes speist.

Zur Aufladung des Akkumulators 7 ist an einer Seitenwand 9 ein Solarzellenmodul 11 angeordnet. Die Aufladung des Akkumulators 7 mittels des Solarzellenmoduls 11 erfolgt über eine Ladevorrichtung 15.

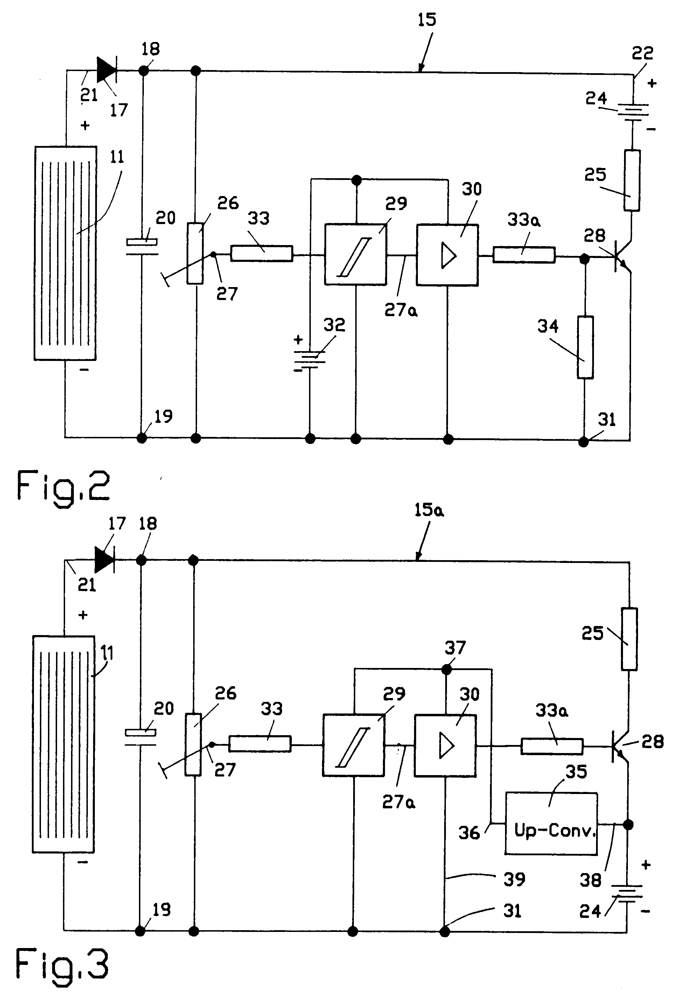

Die Ladevorrichtung 15 ist in Fig. 2 anhand eines Prinzipschaltbildes dargestellt. Der Solarzellenmodul 11 ist unter Zwischenschaltung einer Diode 17 auf die Anschlußpunkte 18, 19 eines Elektrolyt-Kondensators 20 mit einer Kapazität C geschaltet. Die Diode 17 liegt in der positiven Anschlußleitung 21 des Solarzellenmoduls. Die Schaltpunkte 18, 19 sind zum einen an die positive Klemme 22 eines aufladbaren Akkumulators 24 und zum anderen an den Emitter des Schalttransistors 28 angeschaltet. In Reihe mit dem Akkumulator 24 liegt ein Widerstand 25 für die Strombegrenzung und die Einstellung der Ladezeitkonstanten τ = R.C, wobei R die Summe aller Widerstände des Ladestromkreises ist.

Parallel zu dem Elektrolyt-Kondensator 20 ist zwischen die Anschlußpunkte 18 und 19 ein Potentiometer 26, das die Ladefähigkeitsschwelle bestimmt, geschaltet. Sein regelbarer Abgriff 27 ist über einen Begrenzungswiderstand 33 an den Steuereingang eines Schmitt-Triggers 29 angeschlossen.

Der Ausgang des Schmitt-Triggers 29 ist über eine Signalleitung 27a mit einer Treiberstufe 30 verbunden, die als Verstärker zur Ansteuerung des Schalttransistors 28 wirkt und deren Ausgang über einen Begrenzungswiderstand 33a mit der Basis des Schalttransistors 28 verbunden ist. Eine Hilfsbatterie 32 liefert die Versorgungsspannung für die beiden elektrischen Bauteile 29 und 30. Ein Ableitwiderstand 34 verbindet die Basis des Schalttransistors mit dem auf negativem Solarzellenpotential liegenden Schaltpunkt 31.

Eine andere Ladevorrichtung 15a ist in Fig. 3 dargestellt. Die Hilfsbatterie nach Fig. 1 ist dabei ersetzt durch eine Up-Converterschaltung 35, die den Schmitt-Trigger 29 und die Treiberstufe 30 mit der nötigen Spannung versorgt. Die elektrische Energie wird den Akkumulatoren 24 entnommen, über die Anschlußleitungen 38, 39 der Up-Converterschaltung zugeführt und auf das gewünschte Spannungsniveau der Bauteile 29, 30 gebracht.

Die Ladevorrichtung arbeitet wie folgt. Ist der von dem Solarzellenmodul 11 kommende Ladestrom i₁ so groß, daß er den Speicherkondensator 20 auf eine derartige Spannung bringt, daß die Ladestromschwelle des Akkumulators 24 überschritten wird, dann schließen der Schmitt-Trigger 29, die Treiberstufe 30 sowie der Transistor 28 den Kondensator 20 und den Ladestromkreis für den Akkumulator 24. Die Basis des Schalttransistors 28 wird dazu von der Treiberschaltung 30 auf ein solches Potential angehoben, daß der Transistor 28 durchschaltet. Unterschreitet der Ladestrom i₁ des Solarzellenmoduls 11 den zulässigen Grenzwert, dann wird der Schalttransistor über die elektronischen Bauelemente 29, 30 gesperrt. Damit fließt der Ladestrom i₁ des Solarzellenmoduls 11 nur über den Kondensator 20 und lädt diesen auf. Ist die gespeicherte Ladeleistung in dem Kondensator 20 ausreichend groß, so daß die Ladestromschwelle des Akkumulators 24 überschritten wird, dann schließt infolge eines vom Schmitt-Trigger 29 abgegebenen, von der Treiberstufe 30 verstärkten Signals der Schalttransistor 28 wieder den Ladestromkreis zwischen Kondensator 20 und Akkumulator 24.

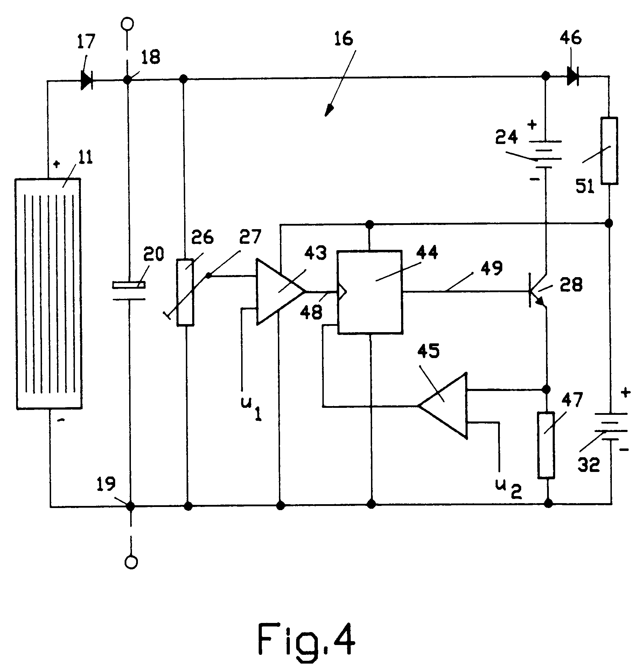

In der Ausführungsform der Ladevorrichtung nach Fig. 4 ist vorgesehen, daß die Ladung des Kondensators 20 bei Überschreiten der Ladespannung am Kondensator 20 den Akkumulator 24 über den Transistor 28 und einen Begrenzungswiderstand 47 nachlädt. Die Nachladung soll beginnen, wenn die am Abgriff 27 des Potentiometers 26 liegende Spannung einen durch eine Vergleichsspannung U1 einstellbaren Schwellwert übersteigt und einen Komparator 43 umschaltet. Durch das Umschalten des Komparators 43 wird ein bistabiler Multivibrator (Flip-Flop) 44 gesetzt, dessen Ausgang mit der Basis des Schalttransistors 28 verbunden ist und somit den Transistor 28 durchschaltet. Weiterhin ist vorgesehen, daß der Ladestrom des Akkumulators 24 am Strombegrenzungswiderstand 47 gemessen wird und an einem zweiten Komparator 45 mit einer Vergleichsspannung U2 verglichen wird. Bei Unterschreitung des zulässigen Ladestroms des Akkumulators 24 wird durch Umschalten des Komparators 45 das Flip-Flop 44 rückgesetzt und unterbricht über den Schalttransistor 28 den Ladestromkreis des Akkumulators 24.

Diese Unterbrechung des Ladestromes wird nicht eintreten, wenn aus der Solarzelle 11 genügend Ladestrom geliefert und somit der untere Schwellwert des Ladestromes nicht unterschritten wird.

Die Hilfsbatterie 32 wird dann nachgeladen, wenn die Spannung am Energiespeicher 20 die Summe der Spannung an der Hilfsbatterie 32 sowie den Spannungsabfällen am Begrenzungswiderstand 51 und der Diode 46 übersteigt. Die Hilfsbatterie 32 stellt die Spannungsversorgung der Steuerelemente 43, 44 und 45 sicher, wenn die Spannung am Energiespeicher 20 dazu nicht mehr ausreicht.

Bei allen Ausführungsbeispielen ist eine bekannte zusätzliche Nachladung der Energiespeicher 20 und Akkumulatoren 24 und 32 über die Schaltpunkte 18, 19 möglich. In Fig. 4 sind die Nachladungsanschlüsse durch gestrichelte Zuleitungen angedeutet.

## Patentansprüche

1. Ladevorrichtung für mit Akkumulatoren betriebene Verbraucher, insbesondere für kleine elektrische Haushaltsgeräte (1), wie beispielsweise elektrische Trockenrasiergeräte, zu deren Energieversorgung aufladbare Akkumulatoren (24) dienen, die mittels einer Ladevorrichtung (15) aufladbar sind, die mit Solarzellen (11) ausgerüstet ist, wobei die Ladevorrichtung (15) einen Energie-Vorspeicher (20) aufweist, der parallel zu den Solarzellen geschaltet ist zum Vorspeichern der Ladeleistung der Solarzellen, wenn die Ladeleistungen der Solarzellen (11) unterhalb der Ladestromschwelle der Akkumulatoren (24) liegen, und zum Abgeben der vorgespeicherten Solarenergie an die Akkumulatoren (24), wenn der sich bei der Entladung des Energievorspeichers (20) einstellende Entladestrom die Ladestromschwelle der Akkumulatoren (24) überschreitet, solange bis die Ladestromschwelle wieder unterschritten wird, und daß die Ladevorrichtung eine Schalteinrichtung (15, 15a, 16) enthält zum Verbinden bzw. Trennen des Energie-Vorspeichers (20) mit bzw. von dem Akkumulator (24),
dadurch gekennzeichnet, daß die Schalteinrichtung (15, 15a, 16) einen spannungsabhängigen Schalter (29) aufweist zum Steuern eines Schalttransistors (28) im Ladestromkreis abhängig vom Spannungszustand am Energie-Vorspeicher (20) und daß die Schalteinrichtung (15, 15a, 16) eingerichtet ist zum Verbinden von Energie-Vorspeicher (20) und Akkumulator (24) zur Abgabe der Ladeleistung, wenn die Spannung am Energie-Vorspeicher (20) einen vorgegebenen Schwellwert übersteigt und die vorgespeicherte oder direkt einfließende Ladeleistung ausreichend hoch ist, um die Ladestromschwelle zu überschreiten, und zum Trennen der Energie-Vorspeicher und der Akkumulatoren bei ungünstiger Witterung, wenn der Ladestrom für den Akkumulator (24) die Ladestromschwelle nicht erreicht, damit der Energiespeicher (20) von dem Solarzellenmodul (11) aufgeladen werden kann für eine pulsierende Aufladung des Akkumulators (24).

2. Ladevorrichtung nach Anspruch 1,
dadurch gekennzeichnet, daß als Energie-Vorspeicher (20) wenigstens ein Kondensator vorgesehen ist.

3. Ladevorrichtung nach Anspruch 1,
dadurch gekennzeichnet, daß der Energie-Vorspeicher (20) wenigstens ein zusätzlicher Akkumulator kleinerer Ladekapazität ist.

4. Ladevorrichtung nach Anspruch 1,
dadurch gekennzeichnet, daß der spannungsabhängige Schalter (29) ein hysteresebehafteter Schmitt-Trigger oder ein Fensterdiskriminator mit einstellbaren Schwellwerten ist.

5. Ladevorrichtung nach Anspruch 4,
dadurch gekennzeichnet, daß die Ladevorrichtung eine zusätzliche Hilfsbatterie (32) enthält zum Sichern der Spannungsversorgung des spannungsabhängigen Schalters (29).

6. Ladevorrichtung nach Anspruch 4,
dadurch gekennzeichnet, daß die Ladevorrichtung eine Up-Converterschaltung enthält zum Sicherstellen der Spannungsversorgung des spannungsabhängigen Schalters (29), wobei die Spannung aus dem Akkumulator (24) mittels der Up-Converterschaltung auf das zum Betrieb erforderliche Niveau angehoben wird.

7. Ladevorrichtung nach Anspruch 1,
dadurch gekennzeichnet, daß zwischen dem spannungsabhängigen Schalter (29) und dem Schalttransistor (28) eine Treiberstufe (30) vorgesehen ist.

8. Ladevorrichtung nach Anspruch 1,
dadurch gekennzeichnet, daß der Schalttransistor (28) ein bipolarer Transistor, ein Darlington-Transistor oder ein Feldeffekttransistor ist.

9. Ladevorrichtung nach Anspruch 1,
dadurch gekennzeichnet, daß die Stellung des Schalttransistors (28) abhängig ist sowohl von der Spannung am Energiespeicher (20) als auch vom Ladestrom des Akkumulators (24).

10. Ladevorrichtung nach Anspruch 1,
dadurch gekennzeichnet, daß die Schalteinrichtung (16) aus zwei spannungsabhängigen Schaltern (43, 45) besteht, wobei der eine Schalter von der Spannung am Energiespeicher (20) und der andere von einer ladestromabhängigen Spannung gesteuert wird, die an einem Begrenzungswiderstand (47) am Ladestromkreis abgegriffen wird, wobei die beiden Schalter (43, 45) einen bistabilen Multivibrator setzen bzw. löschen zum Steuern des Schalttransistors (28) im Ladestromkreis.

## Claims

1. A charging device for battery-operated loads, particularly for small electrical appliances (1) such as, for example electric dry-shavers, whose power supply is provided by rechargeable batteries (24) which can be charged by means of a charging device (15) provided with solar cells (11), the charging device (15) comprising an energy buffer (20) which is arranged in parallel with the solar cells to buffer the charge energy of the solar cells when the charging capacities of the solar cells (11) are below the charging current threshold of the batteries (24), and to supply the buffered solar energy to the batteries (24) when the discharging current produced upon discharge of the energy buffer (20) exceeds the charging-current threshold of the batteries (24) until it falls below the charging current threshold again, and the charging device comprises a switching device (15, 15a, 16) for connecting and disconnecting the energy buffer (20) to/from the battery (24),
characterised in that the switching device (15, 15a, 16) comprises a voltage-dependent switch (29) for controlling a switching transistor (28) in the charging circuit depending on the voltage state across the energy buffer (20), and in that the switching device (15, 15a, 16) is adapted to connect the energy buffer (20) to the battery (24) in order to supply the charging power when the voltage across the energy buffer (20) exceeds a given threshold and when the buffered or directly applied charge energy is sufficiently high to exceed the charging current threshold, and to separate the energy buffer and the battery in the case of unfavourable weather conditions when the charging current for the battery (24) does not reach the charging current threshold, in order to enable the energy buffer (20) to be charged by the solar cell module (11) for pulsatory charging of the battery (24).

2. A charging device as claimed in Claim 1,
characterised in that the energy buffer (20) comprises at least a capacitor.

3. A charging device as claimed in Claim 1,
characterised in that the energy buffer (20) comprises at least an additional battery having a comparatively small charging capacity.

4. A charging device as claimed in Claim 1,
characterised in that the voltage-dependent switch (29) is a hysteresis Schmitt trigger or a window discriminator having adjustable threshold values.

5. A charging device as claimed in Claim 4,
characterised in that the charging device comprises an additional auxiliary battery (32) to provide the voltage supply to the voltage-dependent switch (29).

6. A charging device as claimed in Claim 4,
characterised in that the charging device comprises an up-converter circuit to provide the voltage supply to the voltage-dependent switch (29), said up-converter circuit raising the voltage from the battery (24) to the required operating level.

7. A charging device as claimed in Claim 1,
characterised in that a driver stage (30) is arranged between the voltage-dependent switch (29) and the switching transistor (28).

8. A charging device as claimed in Claim 1,
characterised in that the switching transistor (28) is a bipolar transistor, a Darlington transistor, or a field-effect transistor.

9. A charging device as claimed in Claim 1,
characterised in that the switching transistor (28) is controlled in dependence on the voltage across the energy buffer (20) as well as on the charging current of the battery (24).

10. A charging device as claimed in Claim 1,
characterised in that the switching device (16) comprises two voltage-dependent switches (43, 45), one switch being controlled by the voltage across the energy buffer (20) and the other switch being controlled by a charging-current-dependent voltage taken from a limiting resistor (47) at the charging circuit, the two switches (43, 45) setting or resetting a bistable multivibrator to control the switching transistor (28) in the charging circuit.

## Revendications

1. Dispositif de charge pour appareils électriques à accumulateurs, en particulier pour petits appareils électriques ménagers (1), comme, par exemple, des rasoirs électriques, dont l'alimentation en énergie est assurée par des accumulateurs rechargeables (24), qui peuvent être chargés à l'aide d'un dispositif de charge (15), qui est équipé de cellules solaires (11), le dispositif de charge (15) comportant un préaccumulateur d'énergie (20), qui est connecté en parallèle avec les cellules solaires pour préaccumuler la puissance de charge des cellules solaires lorsque les puissances de charge des cellules solaires (11) se trouvent en dessous du seuil du courant de charge des accumulateurs (24) et pour délivrer l'énergie solaire préaccumulée aux accumulateurs (24) lorsque le courant de décharge qui s'instaure lors de la décharge du préaccumulateur d'énergie (20) dépasse le seuil de courant de charge des accumulateurs (24), aussi longtemps que l'on ne repasse pas en dessous du seuil du courant de charge, et que le dispositif de charge contient un dispositif de commutation (15, 15a, 16) pour connecter le préaccumulateur d'énergie (20) à l'accumulateur (24), ou le séparer de celui-ci, caractérisé en ce que le dispositif de commutation (15, 15a, 16) présente un commutateur fonction de la tension (29) pour commander un transistor de commutation (28) dans le circuit de charge en fonction de l'état de tension sur le préaccumulateur d'énergie (20) et en ce que le dispositif de commutation (15, 15a, 16) est agencé en sorte de connecter le préaccumulateur d'énergie (20) et l'accumulateur (24) pour délivrer la puissance de charge lorsque la tension sur le préaccumulateur d'énergie (20) dépasse une valeur de seuil prédéterminée et que la puissance de charge préaccumulée ou s'écoulant directement est suffisamment élevée pour dépasser le seuil de courant de charge, et pour séparer le préaccumulateur d'énergie et les accumulateurs lors de conditions de temps défavorables lorsque le courant de charge pour l'accumulateur (24) n'atteint pas le seuil de courant de charge si bien que l'accumulateur d'énergie (20) peut être chargé par le module de cellules solaires (11) en vue d'une charge pulsée de l'accumulateur (24).

2. Dispositif de charge selon la revendication 1, caractérisé en ce que l'on utilise comme préaccumulateur d'énergie (20) au moins un condensateur.

3. Dispositif de charge selon la revendication 1, caractérisé en ce que le préaccumulateur d'énergie (20) est au moins un accumulateur supplémentaire de moindre capacité de charge.

4. Dispositif de charge selon la revendication 1, caractérisé en ce que le commutateur fonction de la tension (29) est une bascule de Schmitt à hystérésis ou un discriminateur à fenêtre présentant des valeurs de seuil réglables.

5. Dispositif de charge selon la revendication 4, caractérisé en ce que le dispositif de charge contient une batterie auxiliaire supplémentaire (32) pour garantir l'alimentation en tension du commutateur fonction de la tension (29).

6. Dispositif de charge selon la revendication 4, caractérisé en ce que le dispositif de charge contient un circuit de conversion élévateur pour garantir l'alimentation en tension du commutateur fonction de la tension (29), la tension provenant de l'accumulateur (24) étant élevée au niveau requis pour son fonctionnement via le circuit de conversion élévateur.

7. Dispositif de charge selon la revendication 1, caractérisé en ce qu'entre le commutateur fonction de la tension (29) et le transistor de commutation (28), il y a un étage d'excitation (30).

8. Dispositif de charge selon la revendication 1, caractérisé en ce que le transistor de commutation (28) est un transistor bipolaire, un transistor de Darlington ou un transistor à effet de champ.

9. Dispositif de charge selon la revendication 1, caractérisé en ce que la position du transistor de commutation (28) dépend autant de la tension de l'accumulateur d'énergie (20) que du courant de charge de l'accumulateur (24).

10. Dispositif de charge selon la revendication 1, caractérisé en ce que le dispositif de commutation (16) est constitué de deux commutateurs fonction de la tension (43, 45), le premier commutateur étant commandé par la tension dans l'accumulateur d'énergie (20) et l'autre commutateur étant commandé par une tension dépendant du courant de charge, qui est prélevée sur une résistance limiteuse (47) dans le circuit de charge, les deux commutateurs (43, 45) positionnant ou repositionnant un multivibrateur bistable pour commander le transistor de commutation (28) dans le circuit de charge.
